Europäisches Patentamt

European Patent Office

Office européen des brevets

(19)

(11) Numéro de publication: **0 050 568 B1**

(12) **FASCICULE DE BREVET EUROPEEN**

(45) Date de publication du fascicule du brevet: **20.06.84**

(51) Int. Cl.³: **B 23 K 33/00, G 21 C 13/02**

(21) Numéro de dépôt: **81401629.1**

(22) Date de dépôt: **16.10.81**

(54) Procédé de fabrication d'une virole de cuve de réacteur nucléaire.

(30) Priorité: **22.10.80 FR 8022554**

(43) Date de publication de la demande:
**28.04.82 Bulletin 82/17**

(45) Mention de la délivrance du brevet:
**20.06.84 Bulletin 84/25**

(84) Etats contractants désignés:
**BE DE FR GB IT SE**

(56) Documents cités:
**DE - A - 1 942 631**
**FR - A - 1 499 335**
**FR - A - 2 134 278**
**FR - A - 2 234 086**
**FR - A - 2 456 586**
**US - A - 2 083 234**

(73) Titulaire: **Framatome**
**Tour Fiat 1 place de la Coupole**
**F-92400 Courbevoie (FR)**

(72) Inventeur: **Commeau, Alain**
**15 rue des Genêts Torcy**
**F-71210 Montchanin (FR)**

(74) Mandataire: **Saint-Martin, René et al,**
**CREUSOT-LOIRE 15 rue Pasquier**
**F-75383 Paris Cedex 08 (FR)**

Courier Press, Leamington Spa, England.

## Description

La présente invention se rapporte au procédé de fabrication d'une virole de cuve de réacteur nucléaire munie intérieurement de blocs de guidage saillants servant au guidage des équipements internes.

Une cuve de réacteur nucléaire enfermant le coeur est constituée de viroles cylindriques forgées, en acier légèrement allié. Ces viroles sont soudées les unes aux autres, le fond inférieur de la cuve étant constitué par un fond soudé à l'une des viroles. Cette cuve est entièrement revêtue en acier inoxydable destiné à prévenir la corrosion par l'eau du circuit primaire.

Les équipements internes de la cuve sont guidés par des blocs de guidage solidaires de la virole inférieure de la cuve. Ces blocs de guidage qui servent au guidage de la plaque inférieure du coeur sont pourvus d'une gorge verticale du côté de l'axe de la virole et ont une forme en M.

Le soudage de ces blocs par les procédés connus présente des inconvénients. En particulier dans le cas où les soudures sont à pleine pénétration, la reprise des racines peut se révéler délicate à réaliser du fait de leur manque d'accessibilité.

On connaît d'après le brevet français FR—A—2.134.278 un procédé de soudage de blocs de guidage à l'intérieur d'une cuve de réacteur nucléaire revêtue d'un plaquage à l'intérieur. Selon ce procédé, on exécute sur la paroi interne de la cuve, par beurrage en acier/inoxydable, un rechargement saillant auquel on soude le bloc, par faisceau d'électrons sans métal d'apport. Le bloc de guidage n'est lié au rechargement que sur sa périphérie.

L'invention a pour objet un procédé de fabrication d'une virole revêtue d'un plaquage en acier inoxydable et à laquelle sont soudés des blocs de guidage en alliage à base de nickel. La réalisation des blocs de guidage en alliage à base de nickel confère une résistance améliorée à la corrosion. Ce procédé de fabrication permet d'éviter la reprise des soudures et minimise les usinages et les déformations dues au soudage. Il peut être exécuté facilement, l'axe de la virole étant horizontal pendant certaines phases.

Le procédé selon l'invention consiste à revêtir intérieurement une virole cylindrique externe en acier faiblement allié par un placage mince en acier inoxydable et à fixer à l'intérieur de cette virole des blocs de support et il est essentiellement caractérisé par le fait qu'il consiste à laisser à nu une surface d'acier faiblement allié de la virole entourée par le placage d'acier inoxydable et à déposer sur cette surface en creux un placage, par un procédé de soudage à l'arc, en alliage à base de nickel du type Inconel® jusqu'à obtenir un profil saillant par rapport au placage en acier inoxydable, puis à usiner ce placage, puis à souder à ce placage une pièce rapportée en alliage à base de nickel du type Inconel®, par un procédé de soudage à l'arc avec apport d'alliage de nickel du type Inconel® déposé dans une rainure formée entre le placage et la pièce rapportée.

Selon une caractéristique du procédé on dépose le placage en alliage à base de nickel par des couches successives de feuillard déposées sous flux électroconducteur.

La virole obtenue par ce procédé est munie intérieurement de blocs de guidage saillants et est constituée par une virole cylindrique externe en acier faiblement allié revêtue intérieurement d'un placage mince en acier inoxydable et elle est essentiellement caractérisée par le fait que chaque bloc est en alliage à base de nickel du type Inconel® et est directement soudé sur la surface cylindrique interne en acier faiblement allié et est raccordé au placage mince en acier inoxydable.

L'invention va maintenant être décrite avec plus de détails en se référant aux dessins annexés.

La figure 1 représente la virole à laquelle est soudé un bloc de guidage.

La figure 2 est une vue de détail, en coupe, de la figure 1 montrant le bloc de guidage soudé à la virole.

La figure 3 est une vue en coupe du placage en alliage à base de nickel soudé directement sur la paroi de la virole en acier faiblement allié.

La figure 4 est une vue de ce placage après usinage.

La figure 5 représente le placage usiné et la pièce rapportée en alliage à base de nickel formant le bloc de guidage.

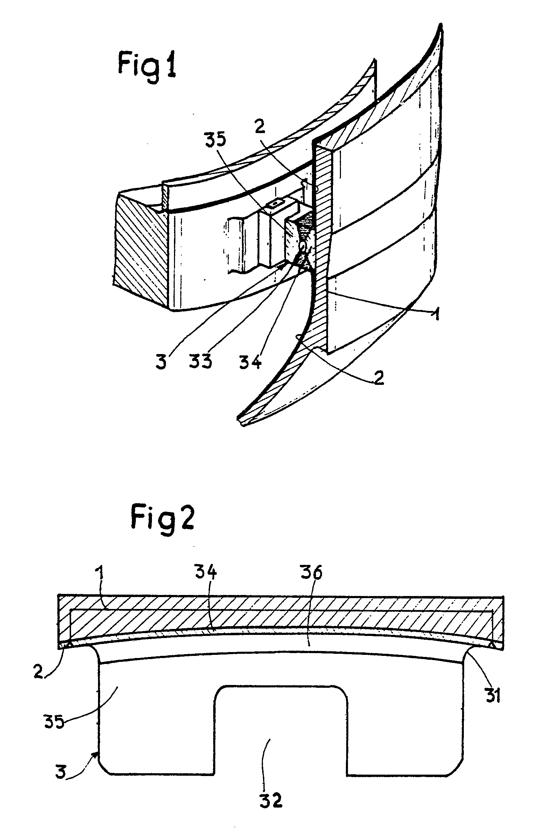

En se référant aux figures 1 et 2, la virole selon l'invention est constituée par une virole externe cylindrique 1 obtenue par forgeage. Cette virole est en acier légèrement allié et elle est revêtue intérieurement par un placage mince 2 en acier inoxydable. Ce placage en acier inoxydable est obtenu de manière connue en soi.

Le bloc de guidage 3 est en alliage à base de nickel du type Inconel® contenant plus de 67% de nickel. La composition pondérale de cet alliage est: $C \leqslant 0,10\%$ — $S \leqslant 0,015\%$ — $P \leqslant 0,030\%$ — $Si \leqslant 0,25\%$ — $Mn: 2,5$ à $3,5\%$ — $Ni \geqslant 67\%$ — $Cr: 18$ à $22\%$ — $Cu \leqslant 0,5\%$ — $Co \leqslant 0,10\%$ — $Nb+Ta = 2,3$ à $3\%$ — $Ti \leqslant 0,75\%$ — $Fe \leqslant 3,0\%$. Ce bloc est directement soudé sur la surface cylindrique interne en acier légèrement allié de la virole et est directement raccordé par un raccord 31 au placage de faible épaisseur 2. Ce bloc est constitué d'une part, par un placage 34 en alliage à base de nickel et d'autre part par une pièce rapportée 35 également en alliage à base de nickel, ces deux parties étant soudées l'une à l'autre par un cordon de soudure 36 en alliage à base de nickel entourant la chambre 33. Ce bloc de guidage 3 comporte vers l'extérieur une rainure 32 formée de surfaces planes et/ou cylindriques parallèles à l'axe de la virole. Ce bloc a la forme d'un M. La partie rapportée est pourvue du côté du placage d'un évidement en forme de cuvette de périmètre égal à un évidement en forme de cuvette prévu dans le placage 34. Les deux évidements forment une chambre 33 dans laquelle débouche l'anneau 37 entre les parties 34 et 35.

La virole 1 est tout d'abord revêtue du placage intérieur 2 en acier inoxydable par un procédé de soudage. A l'emplacement de chaque bloc de guidage 3 dit bloc "M", une surface en acier légèrement allié entourée du placage en acier inoxydable est laissée à nu. Les dimensions de la fenêtre sont adaptées aux dimensions du bloc "M".

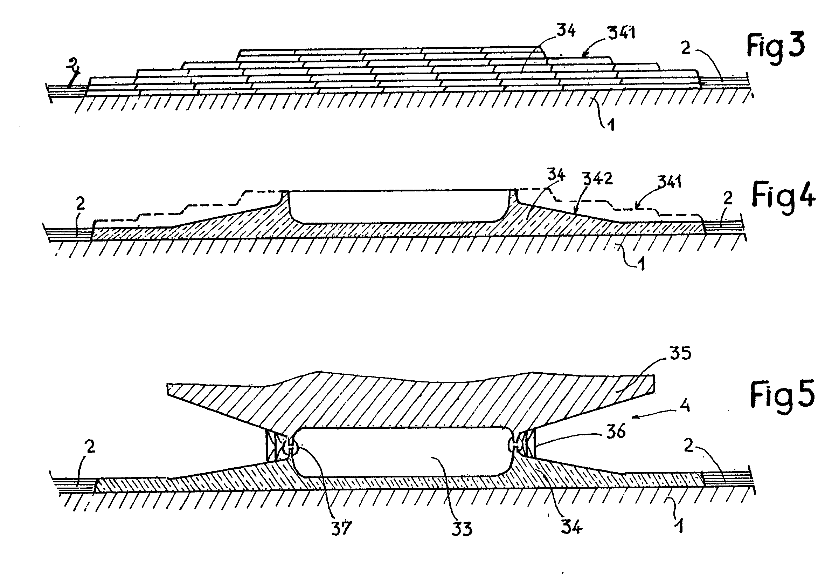

Le placage en alliage à base de nickel est déposé dans la fenêtre en creux par un procédé de soudage à l'arc, au contact de la surface à nu en acier légèrement allié, sous flux électroconducteur. Ce placage en alliage du type Inconel® est déposé par couches successives de feuillard jusqu'à obtenir un profil saillant repéré 341 sur la figure 3. La couche de base au contact de l'acier faiblement allié des déposée à chaud (à une température de l'ordre de 180°C). Les couches supérieures sont déposées à froid.

En variante le placage 34 pourrait être réalisé par beurrage par le procédé de soudage à l'électrode enrobée. Dans ce procédé manuel, l'électrode enrobée comporte une âme en alliage à base de nickel du type Inconel® et un enrobage extérieur qui joue un rôle métallurgique et technique de protection du dépôt. On peut aussi utiliser une électrode du type synthétique ayant une âme en nickel.

Après la réalisation du placage, on exécute une opération de détensionnement.

Le placage 34 est ensuite usiné de manière à passer du profil brut 341 au profil usiné 342 (Figure 4). Ce placage profilé 342 forme un évidement central entouré par un glacis se raccordant au placage 2. Un collet annulaire saillant borde la périphérie de l'évidement central.

On pointe par le procédé de soudage à l'arc TIG un anneau fusible 37 sur le collet du placage 34. Cet anneau est en alliage à base nickel du type Inconel®. Ce procédé TIG utilise une torche équipée d'une électrode de tungstène autour de laquelle la protection gazeuse assure la non-oxydation du bain.

La pièce rapportée 35 destinée à être soudée au placage 34 est en alliage à base de nickel du type Inconel®. Cette pièce comporte un évidement adapté à l'évidement du placage et bordé par un collet de même périmètre que le collet du placage 34.

La pièce rapportée 35 est positionnée au-dessus du placage profilé 34, les collets disposés en vis-à-vis et formant le plan de joint étant séparés par l'anneau fusible 37. La pièce 35 et le placage 34 sont séparés, autour des collets, par une gorge annulaire 4 dont la section a une forme générale en U et dont la largeur (mesurée perpendiculairement à l'axe de la virole) augmente à partir des collets bordant la chambre 33.

On exécute ensuite à l'aide du procédé TIG la passe de racine 36 dans le fond de la rainure annulaire 4. Ce soudage fait fondre l'anneau 37 en alliage à base nickel interposé dans le plan de joint entre les collets. Cet anneau 37 forme alors un bourrelet dans la chambre 33. Pendant cette phase l'axe de la virole est horizontal. Le poids de la pièce 35 écrase l'anneau 37. La rainure 4 est alors remplie partielllement par une couche de soutien en alliage à base nickel type Inconel® par un procédé manuel à l'arc avec électrodes enrobées.

La virole est ensuite basculée de façon que son axe de révolution soit vertical. La rainure 4 est remplie, à l'extérieur de la couche de soutien, par de l'alliage de nickel type Inconel®, déposé en plusieurs couches par un procédé manuel à l'arc avec électrodes enrobées. Cette opération de soudage nécessite de renverser la virole.

Le cordon de soudure 36 est usiné ou meulé sur tout le pourtour de manière à obtenir le raccord 31.

## Revendications

1. Procédé de fabrication d'une virole de cuve de réacteur nucléaire munie intérieurement de blocs de guidage saillants en alliage à base de nickel, constituée par une virole cylindrique (1) externe en acier légèrement allié revêtue intérieurement d'un placage mince (2) en acier inoxydable, consistant à revêtir intérieurement la virole cylindrique (1) en acier légèrement allié par un placage mince (2) en acier inoxydable et à fixer à l'intérieur de cette virole (1) des blocs de support (3, caractérisé par le fait qu'il consiste à laisser à nu une surface d'acier faiblement allié de la virole entourée par le placage d'acier inoxydable (2) et à déposer sur cette surface en creux un placage (34) par un procédé de soudage à l'arc, en alliage à base de nickel du type Inconel®, jusqu'à obtenir un profil saillant par rapport au placage (2) en acier inoxydable puis à usiner ce placage (34) puis à souder à ce placage (34) une pièce rapportée (35) en alliage à base de nickel du type Inconel® par un procédé de soudage à l'arc avec apport d'alliage de nickel du type Inconel® déposé dans une rainure (4) formée entre le placage (34) et la pièce rapportée (35).

2. Procédé selon la revendication 1, caractérisé par le fait qu'il consiste à déposer le placage (34) par des couches successives de feuillard déposées sous flux électroconducteur.

3. Procédé selon l'une quelconque des revendications précédentes, caractérisé par le fait qu'il consiste à interposer un anneau fusible (37) en alliage de nickel dans le plan de joint entre le placage (34) en alliage de nickel et la pièce (35) rapportée en alliage de nickel, avant de déposer un cordon de soudure (36) dans le fond de la rainure.

4. Procédé selon l'une quelconque des revendications précédentes, caractérisé par le fait qu'on positionne la pièce rapportée au-dessus du placage en alliage à base de nickel lorsque la virole est horizontale et qu'on dépose un cordon de soudure dans le fond de rainure et qu'on renverse ensuite la virole.

5. Procédé selon l'une quelconque des revendications précédentes, caractérisé par le fait que la rainure (4) a une section en forme de U.

**Patentansprüche**

1. Verfahren zur Herstellung von einem Kern-reaktorgefäß-Mantelschuß mit innen ange-ordneten, vorstehenden Führungsblöcke aus einer Nickellegierung, bestehend aus einem zylindrischen Aussenmantelschuß (1) aus niedriglegiertem Stahl, der innen einen Überzug mit einer dünnen Plattierung (2) aus Nirostahl aufweist, Verfahren das darin besteht einen Überzug mit einer dünnen Plattierung (2) aus Nirostahl innen auf den zylindrischen Mantelschuß (1) aus niedriglegiertem Stahl aufzutragen und Stützblöcke (3) innen an diesem Mantelschuß (1) zu befestigen, dadurch gekennzeichnet, daß es drain besteht eine von der Niro-stahl-Plattierung (2) umschlossene niedrig-legierte Stahlfläche am Mantelschuß freizu-lassen und mit einem Lichtbogenschweißver-fahren auf diese Hohlfläche eine Plattierung (34) aus einer Nickellegierung, Type Inconel®, aufzutragen bis ein zur Nirostahl-Plattierung (2) hervorstehender Profil erzielt wird, dann diese Plattierung (34) zu bearbeiten, schließlich ein Ansatzstück (35) aus einer Nickellegierung, Typ Inconel®, auf diese Plattierung (34) durch ein Lichtbogenschweißverfahren mit einem Zusatzwerkstoff aus einer Nickellegierung, Typ Inconel® aufzuschweissen, der in eine durch die Plattierung (34) und das Ansatzstück (35) gebildete Nahtfuge (4) aufgetragen wird.

2. Verfahren nach Anspruch 1, dadurch gekennzeichnet, daß es darin besteht die Plattierung (34) in aufeinanderfolgenden Lagen Bandstahl unter UP-Schweißpulver aufzutragen.

3. Verfahren nach einem der vorhergehenden Ansprüche, dadurch gekennzeichnet, daß es darin besteht vor dem Auftragen einer Schweißraupe (36) in die Nahtwurzelfuge einen Schmelzring (37) aus einer Nickellegierung in die Stoßebene zwischen der Plattierung (34) aus Nickellegierung und dem Ansatzstück (35) aus Nickellegierung dazwischenzuschalten.

4. Verfahren nach einem der vorhergehenden Ansprüche, dadurch gekennzeichnet,

daß das Ansatzstück über der Plattierung aus Nickellegierung positioniert wird, wenn der Mantelschuß in der Horizontale ist, daß eine Schweißraupe in die Nahtfuge aufgetragen wird und schließlich der Mantelschuß umgekehrt wird.

5. Verfahren nach einem der vorhergehenden Ansprüche, dadurch gekennzeichnet, daß die Nahtfuge (4) einen U-förmigen Querschnitt aufweist.

**Claims**

1. A process for producing a nuclear reactor vessel shell equipped internally with projecting guiding blocks of a nickel-based alloy, consisting of a cylindrical outer shell (1) of lightly alloyed steel coated internally with a thin plating (2) of stainless steel consisting in cladding the cylindrical shell (1) of lightly alloyed steel internally with a thin plating (2) of stainless steel and in fixing supporting blocks (3) inside this shell (1), characterised in that it consists in leaving bare an area of lightly alloyed steel of the shell surrounded by the plating of stainless steel (2) and in depositing on this hollow area a plating (34) of a nickel-based alloy of the Inconel® type, by a process of arc welding, until a profile which projects relative to the stainless steel plating (2) is obtained, then in machining this plating (34), and then in welding to this plating (34) an added part (35) of a nickel-based alloy of the Inconel® type by a process of arc welding with a layer of nickel alloy of the Inconel® type deposited in a groove (4) formed between the plating (34) and the added part (35).

2. A process according to Claim 1, characterised in that it consists in depositing the plating (34) in successive strip layers deposited under an electroconductive flux.

3. A process according to either of the preceding claims, characterised in that it consists in interposing a fusible ring (37) of a nickel alloy in the plane of the joint between the nickel alloy plating (34) and the nickel alloy added part (35), before depositing a bead of weld (36) in the bottom of the groove.

4. A process according to any one of the preceding claims, characterised in that the added part is positioned above the nickel-based alloy plating when the shell is horizontal and that a bead of weld is deposited in the bottom of the groove and that the shell is overturned afterwards.

5. A process according to any one of the preceding claims, characterised in that the groove (4) has a U-shaped cross-section.

Fig 1

Fig 2

Fig 3

Fig 4

Fig 5

0050 568